(19) **Europäisches Patentamt**

**European Patent Office**

**Office européen des brevets**

(11) **EP 1 107 483 A1**

(12) **EUROPEAN PATENT APPLICATION**

(43) Date of publication:
**13.06.2001 Bulletin 2001/24**

(51) Int Cl.$^7$: **H04B 7/26**

(21) Application number: **99440351.7**

(22) Date of filing: **10.12.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ALCATEL**
**75008 Paris (FR)**

(72) Inventors:
• **Bejjani, Elie**
**92210 St-Cloud (FR)**

• **Bouquier, Jean-Francois**
**75004 Paris (FR)**
• **De Cacqueray, Benoit**
**75017 Paris (FR)**

(74) Representative: **Brose, Gerhard, Dipl.-Ing. et al**
**Alcatel**
**Intellectual Property Department**
**70430 Stuttgart (DE)**

(54) **A method of locating synchronisation information in a signal flow, and a corresponding receiver**

(57) The invention relates, inter alia, to a method of locating, at a mobile station, synchronization information in a signal flow transmitted by a candidate access station while the mobile station has already located synchronization information in another signal flow transmitted by a serving access station.

According to the invention, the method consists in communicating to the mobile station a first indication relating to a timing difference between the candidate access station and the serving access station and a second indication relating to a distance between the serving access station and the candidate access station. The mobile station further limits the search of the synchronization information in the signal flow received from the candidate access station to a search window, which size and position in the signal flow depends on the first indication, the second indication and the location of the synchronization in the signal flow received from the serving access station.

In particular, the first and second indication are sent by a radio network controller controlling the access stations, to the mobile station.

**Fig 1**

**Description**

The field of the invention is that of cellular mobile radio communication networks. More precisely, the present invention relates notably to a method to be used by a mobile station to locate synchronization information in a signal flow transmitted by an access station.

In the description below, the term access station has to be understood, for example, as a base station in a GSM mobile communication network, as a node B in third generation cellular mobile radio communication networks based on Code Division Multiple Access (CDMA). An access station may as well be located on the earth for terrestrial networks or in a satellite for satellite networks.

In cellular mobile radio communication networks, synchronization between mobile stations and access stations is a crucial point. A mobile station has, on one hand, to find synchronization with a first access station to establish a link to the network, and on the other hand, to perform synchronization with further neighboring access stations in order to constitute its candidate set or to keep it up to date.

The candidate set is useful when the mobile station is moving to another cell or when there are bad transmission conditions on the link with the first access station. Indeed, in these cases, the mobile station will measure that the signal flow received from a neighboring access station has a better quality than the signal flow received from the first access station. As a consequence, the network may decide to start a handover so that the access station which signal is received with the best quality becomes the new serving access station for the mobile station (hard-handover) or so that the contributions of the signal flows received from several access stations are combined (soft-handover, macrodiversity).

A first step of a synchronization procedure consists in detecting, at a mobile station, synchronization information contained in the signal flow transmitted by an access station. A slot structure is usually carried by the signal flow, each slot containing predefined synchronization information at a predefined position. This first synchronization step enables the mobile station to recover the slot synchronization. A second step of the synchronization procedure consists in recovering a frame synchronization by using the slot synchronization.

Usually, the mobile station locates synchronization information by correlating the contents of the received signal flow with a sequence representing the searched synchronization information. This sequence is known from the mobile station. As long as the result of the correlation indicates that the synchronization information has not been found, a new correlation is done between the sequence and the contents of the received signal flow shifted by an elementary entity of the slot. An elementary entity corresponds, for example, to a bit in TDMA systems or to a chip in CDMA systems. Usually, the synchronization information is repeated in each slot of the signal flow, then each part of the signal flow as large as a slot contains necessarily the synchronization information. As a consequence, the maximum number of correlations to be performed is equal to the number of elementary entities in a slot. In some CDMA systems a slot comprises 2560 chips, and therefore a maximum of 2560 correlations may have to be operated to find the synchronization information.

Especially in CDMA systems, this correlation procedure requires a lot of computation power and has the disadvantage to decrease noticeably the battery life at the mobile station. This effect is all the more sensitive in case of micro cellular mobile radio communication networks since the density of access stations around the mobile station is high and the candidate set must be often updated.

In prior art, a solution to reduce the complexity of the correlation procedure consists in decreasing the number of operations per correlation and as a consequence to reduce the power consumption at the mobile station. A disadvantage of this solution is that it does not reduce the number of correlations and as a consequence the power consumption remains high.

A particular object of the present invention is to provide a method of locating at a mobile station synchronization information received from a access station, called candidate access station, by taking advantage of an already performed synchronization with another access station, called serving access station, in order to reduce the number of correlations to perform synchronization and to reduce the power consumption at the mobile station.

This object is achieved by a method of locating, at a mobile station, synchronization information in a signal flow transmitted by a candidate access station while the mobile station has already located synchronization information in another signal flow transmitted by a serving access station. The method comprises a step of communicating to the mobile station a first indication relating to a timing difference between the candidate access station and the serving access station; a second indication relating to a distance between the candidate access station and the serving access station. The method further comprises a step of limiting the search of the synchronization information in a search window which size and position in the signal flow received from the candidate access station depends on the first indication, the second indication and the location of the synchronization information in the signal flow received from the serving access station.

An advantage of the present invention is to reduce the maximum number of correlations required to find synchronization information received from a candidate access station when the mobile station is already synchronized with a serving access station.

As a consequence, the method of the present invention reduces the power consumption of mobile stations and increases the battery life of mobile stations in cellular mobile radio communication networks, especially when such networks are based on CDMA.

The present invention also concerns a mobile station and a radio network controller comprising means to support the method of the invention.

Other characteristics and advantages of the invention will appear on reading the following description of a preferred implementation given by way of non-limiting illustration and from the accompanying drawings in which:

Figure 1 shows a cellular mobile radio communication network in which the invention may be implemented;

Figures 2a to 2d show time diagrams representing a first signal flow transmitted by a serving station and a second signal flow transmitted by a candidate access station at different points of observation;

Figure 3 shows a block diagram of an embodiment of a mobile station according to the invention.

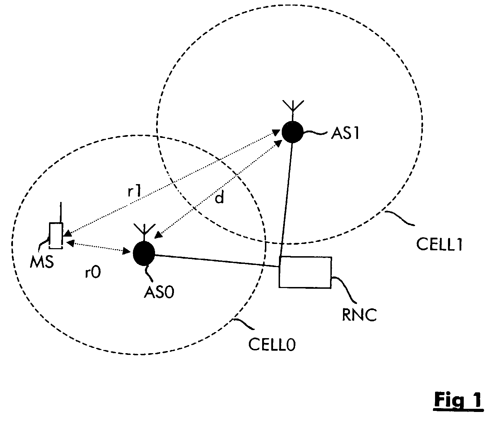

Figure 1 shows a cellular mobile radio communication network comprising two access stations AS0 and AS1 controlling respectively two cells CELL0 and CELL1 in the network. The access stations AS0 and AS1 are connected to a radio network controller RNC, dedicated to control the access stations AS0 and AS1. The connections between the RNC and the access stations are for example wired links. The distance between the access stations AS0 and AS1 is noted d. A mobile station MS is located in the cell CELL0 of the cellular mobile radio communication network. The distance between the mobile station MS and the access station AS0 is noted r0 and the distance between the mobile station MS and the access station AS1 is noted r1.

The access station AS0 continuously broadcasts a signal flow containing information for mobile stations located in cell CELL0 to be able to establish a link to the RNC over the access station AS0. Access station AS0 is called in the following description serving access station AS0. Predefined synchronization information are also contained in the signal flow for the mobile station to properly recover the structure of the signal flow. The structure of the signal flow broadcast on a broadcast channel is preferably a slot structure, each slot containing at a predefined position the predefined synchronization information. The predefined synchronization information is a predefined chip sequence inserted by the serving access station AS0 in the signal flow at a predefined position and also known by the mobile station MS.

As soon as the mobile station MS has been switched on, it carries out a synchronization procedure with the serving access station AS0 controlling the cell CELL0 in which the mobile station MS is located. The synchronization procedure consists for the mobile station MS to locate the synchronization information in the signal flow received from the serving access station AS0. The mobile station MS carries out correlations between the predefined chip sequence and a truncation of the signal flow. The truncation of the signal flow is for each correlation shifted by one chip. The results of the correlation indicates, if the synchronization information has been found or not.

Once the mobile station MS has conventionally performed synchronization with serving access station AS0, it looks for synchronizing with other neighboring access stations, in that case access station AS1, in order to add access station AS1 to its candidate set.

For purpose of simplicity, this example takes into account a unique neighboring access station AS1. However, the invention is also applicable if the mobile station MS have to look for synchronizing with any number of neighboring access stations.

The access station AS1 is called in the following description candidate access station. AS1 also continuously broadcasts a signal flow containing information for the mobile stations to be able to establish a link to the RNC over the candidate access station AS1. The structure of the signal flow broadcast by candidate access station AS1 is preferably the same as the structure of the signal flow broadcast by serving access station AS0.

The access stations AS0 and AS1 of the cellular mobile radio communication network may be synchronized for example by using a Global Positioning System (GPS), the synchronization information are, in that case, transmitted at the same instant from both access stations AS0 and AS1. The propagation delay of the signal flows from the access stations AS0, respectively AS1, to the mobile station MS depends on the distance r0 between serving access station AS0 and mobile station MS, respectively on the distance r1 between candidate access station AS1 and mobile station MS. As a consequence, the synchronization information transmitted by the access stations AS0 and AS1 are received at different time at mobile station MS.

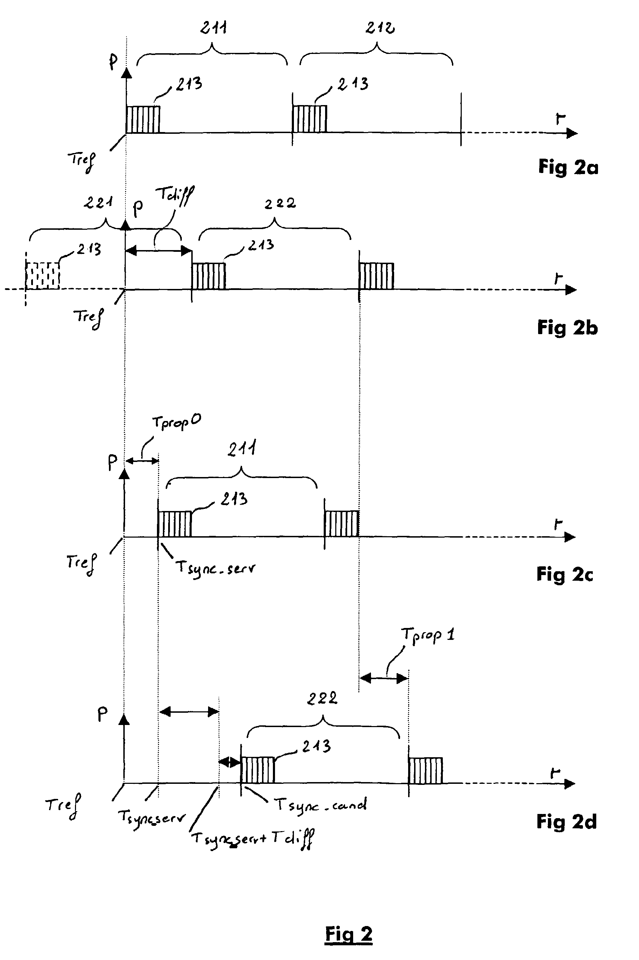

In another type of cellular mobile radio communication network, the access stations AS0 and AS1 may be unsynchronized. Figure 2a to fig.2d illustrate such a case. Figure 2a to fig.2d show four correlated time axes having the same time reference, Tref, the vertical axes represent a power level P of signal flows.

Fig.2a represents an extract of the signal flow broadcast by serving access station AS0. The signal flow carries a slot structure and two consecutive slots 211 and 212 are represented. The beginning of slot 211 corresponds to the time reference of the time axis. Each slot 211, 212 contains, at its beginning, a predefined chip sequence 213 corresponding to the synchronization information. Each slot 211, 212 may contain other information which are not represented on figure 2a.

Fig.2b represents an extract of the signal flow broadcast by candidate access station AS1. This signal flow carries an identical slot structure as the signal flow showed on fig.2a. The slot duration is, as a consequence, identical for both signal flow. From the time reference on, a remaining portion of a slot 221 is transmitted followed by a slot 222. Slot 221 and slot 222 also contain, at their beginning, the predefined chip sequence 213 corresponding to the synchronization information. Slot 221 and slot 222 may contain other information which are not represented on fig.2b. There is a timing difference, Tdiff, between the beginning of slot 222 and the beginning of slot 211.

Fig.2c is an image, at mobile station MS, of the signal flow broadcast by serving access station AS0. Fig.2a and fig.2c represent the same signal flow observed at two different points: at access station AS0 for fig.2a and at mobile station MS for fig.2c. The propagation delay between serving access station AS0 and at mobile station MS is equal to Tprop0. As a consequence, fig.2c shows the same content as fig.2a but delayed by the propagation delay Tprop0. The time of reception of the beginning of slot 211 is referenced as Tsync_serv.

Fig.2d is an image, at mobile station MS, of the signal flow broadcast by candidate access station AS1. Fig. 2b and fig.2d represent the same signal flow observed at two different points: at access station AS1 for fig.2b and at mobile station MS for fig.2d. The propagation delay between candidate access station AS1 and MS is equal to Tprop1. As a consequence, fig.2d shows the same content as fig.2b but delayed by the propagation delay Tprop1. The time of reception of the beginning of slot 222 is referenced as Tsync_cand. The time Tsync_serv corresponding to the time of reception of slot 211 and the time Tsync_serv+Tdiff are also referenced on fig.2d.

Assumed that the mobile station MS has found out the location of synchronization information in the signal flow received from serving access station AS0, then the time Tsync_serv has been identified by the mobile station MS. The time of reception of synchronization information Tsync_cand in the signal flow received from candidate access station AS1 is deduced by the mobile station MS from the knowledge of the parameters Tdiff, Tprop0 and Tprop1, as follows:

$$T_{sync\_cand} = T_{sync\_serv} + T_{diff} + (T_{prop1} - T_{prop0})$$

Usually, the exact propagation delays Tprop0, Tprop1 or the difference of propagation delays (Tprop1-Tprop0) are not accessible for the mobile station MS. The knowledge of the distance d between access station AS0 and AS1 may advantageously replace the knowledge of Tprop0 and Tprop1 which are more difficult to evaluate and vary when the mobile station MS moves. The following inequality shows how the distance d can be used to upper bound the difference of propagation delays:

$$\left| T_{prop1} - T_{prop0} \right| = \left| \frac{r_0 - r_1}{v} \right| \leq \frac{d}{v} \qquad (1)$$

where:

- r0 is the distance between mobile station MS and serving access station AS0;
- rl is the distance between mobile station MS and candidate access station AS1;
- v is the signal propagation speed. In usual cellular mobile radio communication networks, the signal propagation speed may be advantageously approximated with the light speed.

An embodiment of the present invention consists in communicating the timing difference, Tdiff, between access station AS0 and access station AS1 to the mobile station MS. For that purpose, each access station AS0 and AS1 sends, at initialization of the network, a message to the RNC containing the value of its internal clock.

The radio network controller RNC calculates the timing difference, Tdiff, preferably a signed timing difference, and stores it. A table is dedicated, at the radio network controller RNC, to store the timing difference values for each couple of access stations controlled by the RNC. In a preferred embodiment, not all couples of access stations need to be considered, but only couples of access stations which are in a close neighborhood and likely to be both part of the candidate set of a mobile station.

Then, the radio network controller RNC sends the appropriate timing differences to each access station AS0, AS1 which in turn include this indication in their respective broadcast signal flow.

The distance d between the access stations AS0 and AS1 is a network parameter that is stored in the radio network controller RNC. A specific table at the RNC contains the distance between each couple of access stations controlled by the RNC. The table may be filled once at the initialization of the radio network controller RNC. A message containing the appropriate distance is transmitted by the RNC to each access stations AS0 and AS1. The respective access stations AS0, AS1 in turn include the distance indications in their respective broadcast signal flow.

Once the mobile station MS has found the synchronization information in the signal flow transmitted by serving access station AS0, it is able to access the contents of the signal flow broadcast by serving access station AS0 and inter alia the timing difference Tdiff between serving access station AS0 and candidate access station AS1, and the distance d between serving access station AS0 and candidate access station AS1. These indications are extracted from predefined locations in the broadcast signal flow known by the mobile station MS.

In case several access stations are expected to enter the candidate set of mobile station MS, the broadcast signal flow contains, at predefined locations, a timing difference and the corresponding distance for all these neighboring stations the mobile station MS has to look for synchronizing with.

The mobile station uses the timing difference Tdiff to determine the exact time when the synchronization information transmitted by candidate access station AS1 would be received at the mobile station MS if the propagation delays Tprop0 and Tprop1 were the same:

The mobile station MS uses the distance d between the access stations AS0 and AS1 from the received signal flow to evaluate in which time interval Tsync_cand is located. From (1), an inequality (2) can be deduced:

$$T_{sync\_serv} + T_{diff} - \frac{d}{v} \leq T_{sync\_cand} \leq T_{sync\_serv} + T_{diff} + \frac{d}{v} \qquad (2)$$

The time interval given by (2) necessarily contains the synchronization information transmitted by candidate access station AS1. This time interval is centered on the instant Tsync_serv+Tdiff and has a size of $\frac{2 \cdot d}{v}$. Then, the synchronization information has only to be searched in that time interval called search window.

In usual cellular mobile radio communication networks, the value $\frac{2 \cdot d}{v}$ is much smaller than a slot duration. As a consequence the number of correlations to be done to locate synchronization information is much smaller than in prior art solutions.

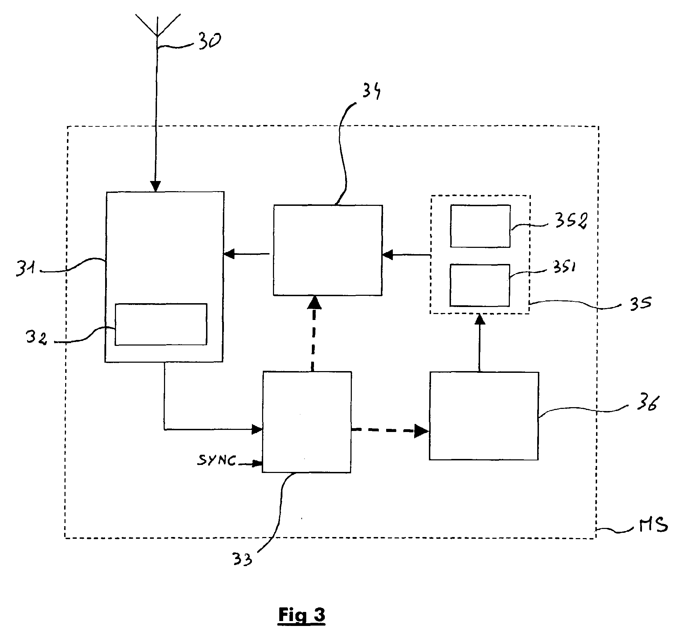

Figure 3 shows a bloc diagram of a mobile station MS according to the invention. The mobile station MS comprises an antenna 30 connected to a slot memory 31 comprising a sliding window 32. Slot memory 31 is connected to the input of a correlator 33. Correlator 33 may trigger a processor 34 which controls the position of sliding window 32 inside slot memory 31. A processor input 35 comprises a timing difference memory 351 and a distance difference memory 352 which contents are also used by processor 34 to determine the position of sliding window 32. Correlator 33 also triggers a slot analyzer 36 which accesses and interprets the contents of the signal flow in which synchronization information have been found.

Slot memory 31 is dedicated to store a part of the signal flow received at antenna 30. Preferably, slot memory 31 should store a part of the signal flow at least as large as a slot. Sliding window 32 is as large as a predefined chip sequence SYNC corresponding to the searched synchronization information and dedicated to select a part of slot memory 31. The contents of sliding window 32 is correlated at correlator 33 with the predefined sequence SYNC.

If the mobile station has not already located any synchronization information in the signal flow processor 34 uses a default position for sliding window 32. This default position for sliding window 32 corresponds to the beginning of slot memory 31.

The result of the correlation indicates if synchronization information have been found. If synchronization information have not been found correlator 33 triggers processor 34 which shifts the position of sliding window 32 by a chip and a new correlation is started at correlator 33. When synchronization information have been found, correlator 33 triggers processor 34 so that the latter stores the exact position of sliding window 32, and as a consequence the location of synchronization information in slot memory 31.

Alternatively, correlator 33 could perform, as a first step, all the possible correlations between the predefined sequence SYNC and the slot memory 31 and detect according to the correlation result profile a pick corresponding to the location of synchronization information. As a second step, correlator 33 could indicate to processor 34 the position in slot memory 31 where the synchronization information have been found.

To decrease the probability of an error in locating the synchronization information, the same can be done on several consecutive slots and the result of correlation is averaged on these several consecutive slots.

Correlator 33 also triggers slot analyzer 36 so that it accesses and interprets the contents of the signal flow transmitted by the access station. Slot analyzer 36 is inter alia dedicated to:

- extract, from a first predefined location in the slot memory 31, information on a timing difference and store it in timing difference memory 351;
- extract, from a second predefined location in the slot memory 31, information on a distance and store it in distance memory 352.

The timing difference is preferably the timing difference between the candidate access station and a serving access station, whose synchronization information have been located. The distance is preferably the distance between the serving access station and the same candidate access station.

To localize the synchronization information in the signal flow received from a candidate base station, processor 34 limits the search of those synchronization information to a search window, which size and position depend on the contents of timing difference memory 351, the contents of distance memory 352 and the location of synchronization information received from the serving access station. Processor 34 sets the position of sliding window 32 at the beginning of the search window.

The synchronization information are searched using the same method as explained above for the search of synchronization information from the serving access station but instead of searching synchronization information in a whole slot, correlations are only performed inside the search window.

In a preferred embodiment, mobile station MS has to synchronize with more than one candidate access station. Then timing difference memory 351 as well as distance memory 352 may advantageously be arrays storing respectively the set of timing difference and the set of distances wherein the timing difference indication and the distance indication relating to the same candidate access station are referenced as such. For example, both indication may be stored at the same entry number in their respective array.

It will furthermore be apparent that other forms of the invention, and embodiments other than embodiments described above may be devised without departing from the spirit and scope of the appended claims.

**Claims**

1. A method of locating, at a mobile station (MS), synchronization information (213) in a signal flow transmitted by a candidate access station (AS1) to said mobile station (MS), said mobile station (MS) having already located synchronization information(213) in another received signal flow transmitted by a serving access station (AS0), said method being characterized by further comprising the steps of:

   - receiving at said mobile station (MS) a first indication relating to a timing difference (Tdiff) between said candidate access station (AS1) and said serving access station (AS0);
   - receiving at said mobile station (MS) a second indication relating to a distance (d) between said candidate access station(AS1) and said serving access station (AS0);
   - searching at said mobile station (MS) said synchronization information (213) transmitted by said candidate access station inside a search window, which size and position in said signal flow received from said candidate access station (AS1) depend on said first indication, on said second indication and on the location (Tsync_serv) of said synchronization information in said signal flow received from said serving access station (AS0).

2. A method according to claim 1, characterized in that said signal flow transmitted by said serving access station (AS0) and said signal flow transmitted by said candidate access station (AS1) carry identical slot structures, each slot (211, 212, 221, 222) comprising said synchronization information (213) at the same position.

3. A method according to claim 1, characterized in that said search window is contained in a time interval centered on the location Tsync_serv+Tdiff in said signal flow received from said candidate access station (AS1), where:

   - Tsync_serv is the location in said signal flow received from said candidate access station (AS1) corresponding to the location of said synchronization information(213) received from said serving access station (AS0) in said signal flow received from said serving access station (AS0);
   - Tdiff is said timing difference between said candidate access station (AS1) and said serving access station (AS0),

   the size of said time interval being equal to $\frac{2 \cdot d}{v}$, where:

   - d is the distance between said serving access station and said candidate access station;
   - v is the signal propagation speed.

4. A method according to claim 1, characterized in that it is used in a cellular mobile communication network based on code division multiple access.

5. A method according to claim 1, characterized in that said first indication and said second indication are transmitted by a radio network controller (RNC) over said serving access station (AS0) to said mobile station (MS).

6. A mobile station (MS) to receive a signal flow from a serving access station (AS0) and another signal flow from a candidate access station (AS1), both signal flows comprising synchronization information (213), said mobile station (MS) comprising a correlator (33) for searching synchronization information (213) in said signal flows and having already located said synchronization information (213) in said signal flow received from said serving access station (AS0), said mobile station (MS) being characterized in that it comprises:

   - a timing difference memory (351) for storing a first indication relating to a timing difference (Tdiff) between said candidate access station (AS1) and said serving access station (AS0);
   - a distance memory (352) for storing a second indication relating to a distance (d) between said candidate access station (AS1) and said serving access station (AS0); and
   - a processor (34) for limiting the search of said synchronization information (213) transmitted by said candidate access station (AS1) to a search window, which size and position in said signal flow received from said candidate access station (AS1) depend on said first indication, on said second indication and on the location (Tsync_serv) of said synchronization information in said signal flow received from said serving access station (AS0).

7. A receiver for implementing the method of any of the claims 1 to 5.

8. A radio network controller (RNC) part of a cellular mobile radio communication network controlling at least two access stations (AS0, AS1), characterized in that it comprises:

   - a first table for storing indications relating to distances between couples of access stations (AS0, AS1); and
   - a second table for storing indications relating to timing differences between couples of access stations (AS0, AS1).

**Fig 1**

Fig 2a

Fig 2b

Fig 2c

Fig 2d

**Fig 2**

**Fig 3**

| | European Patent Office | EUROPEAN SEARCH REPORT | Application Number EP 99 44 0351 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 440 561 A (WERRONEN ALTON P) 8 August 1995 (1995-08-08) * abstract * * column 2, line 31-41 * * column 4, line 5-20 * * column 4, line 60 - column 5, line 6 * * column 5, line 37-58 * * column 6, line 8-26 * * figures * * claims * | 1-8 | H04B7/26 |
| A | US 5 870 389 A (ARDITI SHMUEL  ET AL) 9 February 1999 (1999-02-09) * column 13, line 57 - column 15, line 12 * * claims 1,10 * | 1-8 | |
| A | WO 94 21057 A (ERICSSON TELEFON AB L M) 15 September 1994 (1994-09-15) * abstract * * page 1, line 5-15 * * page 2, line 27 - page 3, line 29 * * page 7, line 24 - page 10, line 18 * * figures * * claims * | 1-8 | TECHNICAL FIELDS SEARCHED (Int.Cl.7) H04B H04Q |
| A | US 5 711 003 A (DUPUY PIERRE) 20 January 1998 (1998-01-20) * abstract * * column 5, line 56 - column 6, line 21 * * column 6, line 51 - column 7, line 6 * * claims * | 1-8 | |

The present search report has been drawn up for all claims

| Place of search | Date of completion of the search | Examiner |
|---|---|---|
| THE HAGUE | 3 May 2000 | Dejonghe, 0 |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 107 483 A1

## ANNEX TO THE EUROPEAN SEARCH REPORT
## ON EUROPEAN PATENT APPLICATION NO.

EP 99 44 0351

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2000

| Patent document cited in search report | | Publication date | Patent family member(s) | | Publication date |
|---|---|---|---|---|---|
| US 5440561 | A | 08-08-1995 | NONE | | |
| US 5870389 | A | 09-02-1999 | AU | 3589097 A | 21-01-1998 |
| | | | EP | 0909520 A | 21-04-1999 |
| | | | WO | 9800992 A | 08-01-1998 |
| WO 9421057 | A | 15-09-1994 | AU | 672294 B | 26-09-1996 |
| | | | AU | 6223394 A | 26-09-1994 |
| | | | CA | 2133734 A | 15-09-1994 |
| | | | CN | 1103242 A | 31-05-1995 |
| | | | DE | 69418547 D | 24-06-1999 |
| | | | DE | 69418547 T | 16-09-1999 |
| | | | EP | 0638215 A | 15-02-1995 |
| | | | ES | 2133545 T | 16-09-1999 |
| | | | FI | 945120 A | 31-10-1994 |
| | | | GR | 3030895 T | 30-11-1999 |
| | | | JP | 7507433 T | 10-08-1995 |
| | | | NZ | 262526 A | 26-07-1996 |
| | | | SG | 42906 A | 17-10-1997 |
| | | | US | 5640679 A | 17-06-1997 |
| US 5711003 | A | 20-01-1998 | FR | 2705514 A | 25-11-1994 |
| | | | AT | 161131 T | 15-12-1997 |
| | | | AU | 687061 B | 19-02-1998 |
| | | | AU | 6788594 A | 12-12-1994 |
| | | | CA | 2162707 A | 24-11-1994 |
| | | | CN | 1123074 A | 22-05-1996 |
| | | | DE | 69407284 D | 22-01-1998 |
| | | | DE | 69407284 T | 20-05-1998 |
| | | | EP | 0698318 A | 28-02-1996 |
| | | | ES | 2110754 T | 16-02-1998 |
| | | | FI | 955437 A | 13-11-1995 |
| | | | WO | 9427383 A | 24-11-1994 |
| | | | JP | 9504144 T | 22-04-1997 |

EPO FORM P0459

For more details about this annex : see Official Journal of the European Patent Office, No. 12/82

12